(19) Europäisches Patentamt
European Patent Office
Office européen des brevets

(11) EP 2 851 989 A1

(12) EUROPEAN PATENT APPLICATION
published in accordance with Art. 153(4) EPC

(43) Date of publication:
**25.03.2015 Bulletin 2015/13**

(21) Application number: **13805083.6**

(22) Date of filing: **10.06.2013**

(51) Int Cl.:
***H01M 10/0567*** *(2010.01)* ***H01M 10/052*** *(2010.01)*
***H01M 10/0568*** *(2010.01)* ***H01M 10/0569*** *(2010.01)*

(86) International application number:
**PCT/JP2013/066005**

(87) International publication number:
**WO 2013/187380 (19.12.2013 Gazette 2013/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **13.06.2012 JP 2012133553**
**20.05.2013 JP 2013105746**
**20.05.2013 JP 2013105784**
**07.06.2013 JP 2013120482**

(71) Applicant: **Central Glass Company, Limited**
**Yamaguchi 755-0001 (JP)**

(72) Inventors:
- **KONDO, Yuki**
**Ube-shi**
**Yamaguchi 755-0001 (JP)**
- **KUBO, Makoto**
**Ube-shi**
**Yamaguchi 755-0001 (JP)**
- **MORINAKA, Takayoshi**
**Ube-shi**
**Yamaguchi 755-0001 (JP)**
- **YAMAMOTO, Kenta**
**Ube-shi**
**Yamaguchi 755-0001 (JP)**

(74) Representative: **Manitz, Finsterwald & Partner GbR**
**Martin-Greif-Strasse 1**
**80336 München (DE)**

# (54) ELECTROLYTE FOR NON-AQUEOUS ELECTROLYTE BATTERY, AND NON-AQUEOUS ELECTROLYTE BATTERY USING SAME

(57) An electrolyte for non-aqueous electrolyte battery containing at least one compound selected from the group consisting of lithium difluoro(bis(oxalato))phosphate, lithium tetrafluoro(oxalato)phosphate and lithium difluoro(oxalato) borate as a first compound and at least one siloxane compound represented by the general formula (1) or the general formula (2) as a second compound in the electrolyte is disclosed. In addition to the improvement of initial characteristic, this electrolyte shows a tendency that storage stability, low temperature characteristic, etc. are superior, and exhibits well-balanced, superior, performances as a whole battery.

(1)

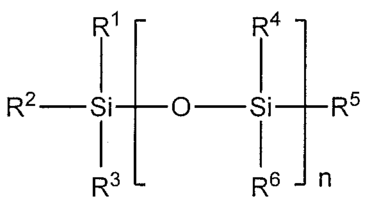

(2)

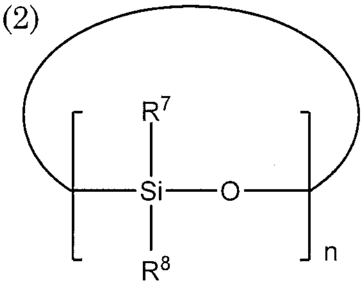

EP 2 851 989 A1

## Description

TECHNICAL FIELD

The present invention relates to an electrolyte for a non-aqueous electrolyte battery constituting a non-aqueous electrolyte secondary battery which has a large initial electric capacity and is superior in cycle characteristic and low temperature characteristic, and a non-aqueous electrolyte battery using the same.

Recently, electrical storage systems for information-related equipment or telecommunication equipment, i.e., electrical storage systems for equipment having a small size and requiring a high energy density, such as personal computers, video cameras, digital still cameras and cellular phones, as well as electrical storage systems for equipment having a large size and requiring a high electric power, such as electric automobiles, hybrid vehicles, auxiliary power supplies for fuel cell vehicles and electricity storages, have been attracting attentions. As one of the candidates, non-aqueous electrolyte batteries have been actively developed, such as lithium ion batteries, lithium batteries, lithium ion capacitors, etc.

Many types of these non-aqueous electrolyte batteries have already been put into practical use. However, decreasing of electric capacity and increasing of internal resistance occur by the use during low temperatures or repeating charging and discharging. Due to these reasons, in the use for an electric power of a car requiring a long time use under a cold environment, performance of non-aqueous electrolyte batteries has a problem.

Until now, as a means for improving a low temperature characteristic and battery characteristic (cycle characteristic) in case of repeating charging and discharging of a non-aqueous electrolyte battery, optimization of various constituent elements of a battery, such as active materials of cathode and anode, etc., has been considered. Technology related to non-aqueous electrolytes is not the exception, either. It has been suggested to suppress deterioration by various additives, which is caused by decomposing of an electrolyte on the surface of active cathode and anode. For example, in JP Patent Application Publication 2005-032714 (Patent Publication 1), a method has been suggested, which suppresses increasing of the internal resistance and deterioration of the cycle characteristic of a battery by adding lithium difluoro(bis(oxalato))phosphate or lithium difluoro(oxalato)borate to a non-aqueous electrolyte. However, compared with a non-aqueous electrolyte battery in which the above-mentioned compound has not been added, the initial electric capacity tends to be low. Non-aqueous electrolyte batteries have been required to have a large capacity regardless of the use for small-size equipment and the use for large-size equipment. Therefore, it is not preferable to have a lowering of the initial capacity. In addition, in JP Patent Application Publication 2002-134169 (Patent Publication 2) and JP Patent Application Publication 2004-71458 (Patent Publication 3), a method has been suggested, which improves the cycle characteristic and the low temperature characteristic by suppressing increasing of the internal resistance at the time of low temperatures of a non-aqueous electrolyte battery by adding a silicon compound, such as a disiloxane compound, a siloxane compound, a cyclic siloxane compound, etc., to a non-aqueous electrolyte. Moreover, in JP Patent Application Publication 2009-164030 (Patent Publication 4), a method has been suggested, which improves the cycle characteristic and the low temperature characteristic of a non-aqueous electrolyte battery by adding both of 1,3-divinyltetramethyldisiloxane and lithium bis(oxalato)borate to a non-aqueous electrolyte.

PRIOR ART REFERENCES

PATENT PUBLICATIONS

Patent Publication 1: Japanese Patent Application Publication 2005-032714
Patent Publication 2: Japanese Patent Application Publication 2002-134169
Patent Publication 3: Japanese Patent Application Publication 2004-071458
Patent Publication 4: Japanese Patent Application Publication 2009-164030

SUMMARY OF THE INVENTION

The initial electric capacity, the cycle characteristic and the low temperature characteristic, which are obtained by the batteries disclosed in the prior art references, are not sufficiently satisfactory. If lithium difluoro(bis(oxalato))phosphate, lithium tetrafluoro(oxalato)phosphate or lithium difluoro(oxalato)borate is added into an electrolyte, it is possible to suppress the increase of the internal resistance and deterioration of the cycle characteristic of the battery. However, the initial electric capacity tends to decrease. This is considered to be the result caused by the increase of concentration of a free acid in the electrolyte in a relatively short time.

Even if it is an electrolyte for non-aqueous electrolyte battery, in which at least one compound selected from

the group consisting of lithium difluoro(bis(oxalato))phosphate, lithium tetrafluoro(oxalato)phosphate and lithium difluoro(oxalato)borate has been added, in case of using the electrolyte for a non-aqueous electrolyte battery, the present invention provides an electrolyte for non-aqueous electrolyte battery, in which the initial electric capacity has been increased, and a non-aqueous electrolyte battery using the same, without damaging the improvement of cycle characteristic, the effect of suppressing the increase of the internal resistance, the improvement of low-temperature characteristic, etc.

As a result of an eager study to solve such problem, the present inventors have found an important information that, as compared with a non-aqueous electrolyte for non-aqueous electrolyte battery containing a non-aqueous solvent and a solute, even in an electrolyte prepared by adding a compound selected from the group consisting of lithium difluoro(bis(oxalate))phosphate, lithium tetrafluoro(oxalate)phosphate and lithium difluoro(oxalate)borate, it is possible to reduce the concentration of the free acid after preparation of the electrolyte by containing a siloxane compound of a specific structure in the electrolyte.

Then, it has been found that, probably attributed to this effect of suppressing the free acid, a non-aqueous electrolyte battery prepared by using the electrolyte for a non-aqueous electrolyte battery is able to suppress lowering of the initial electric capacity.

In addition to the improvement of these initial characteristics, the non-aqueous electrolyte battery having the structure showed trends such as the improvement of storage stability (maintenance rate of capacity after a long time has passed), the improvement of the cycle characteristic, the effect of suppressing the increase of the internal resistance or the improvement of the low temperature characteristic, etc. Therefore, it was understood that the non-aqueous electrolyte battery shows superior performances as a whole battery.

Furthermore, in the electrolyte for the non-aqueous electrolyte battery, in case of using a specific "siloxane containing a fluorine-containing alkoxy group" as the siloxane compound, in addition to the improvement of the above-mentioned initial characteristic, the present inventors discovered that there is a remarkable improvement in the amount (rate) of the siloxane compound remaining after a long period of time. As a result, it became clear that the storage stability of the non-aqueous electrolyte becomes higher and the maintenance rate of capacity of the non-aqueous electrolyte after conducting charging and discharging cycle for a long time becomes further higher.

In this way, the present inventors discovered an electrolyte for non-aqueous electrolyte battery having excellent physical properties and a non-aqueous electrolyte battery using the same, and the present invention was completed.

That is, the present invention provides an electrolyte for non-aqueous electrolyte battery containing a non-aqueous solvent and a solute, the electrolyte for non-aqueous electrolyte battery (in the following, it may be written as simply "non-aqueous electrolyte" or "electrolyte") being characterized by that at least one compound selected from the group consisting of lithium difluoro(bis(oxalato))phosphate, lithium tetrafluoro(oxalato)phosphate and lithium difluoro(oxalato)borate as a first compound and at least one siloxane compound represented by the general formula (1) or the general formula (2) as a second compound are contained in the electrolyte.

(1)

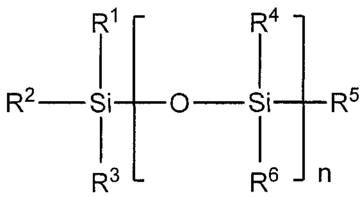

(2)

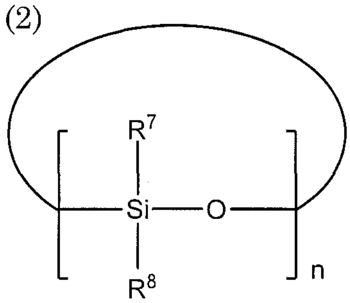

[In the general formula (1) and the general formula (2), each of $R^1$ to $R^8$ independently represents a group selected from an alkyl group, an alkoxy group, an alkenyl group, an alkenyloxy group, an alkynyl group, an alkynyloxy group, an aryl group and an aryloxy group. These groups may have a fluorine atom and an oxygen atom. In addition, n represents an integral number from 1 to 10. In case that n is 2 or greater, plural of $R^4$, $R^6$, $R^7$ or $R^8$ may respectively be the same or different.]

There is no specific limitation in carbon number of these alkyl group, alkoxy group, alkenyl group, alkenyloxy group, alkynyl group and alkynyloxy group. However, considering easy availability of raw materials, it is usually from 1 to 6. Especially, it is possible to preferably use a group having the carbon number of 1 to 3. In addition, in case that the carbon number is 3 or greater, it is also possible to use one of a branched chain or cyclic structure.

As "aryl" part of the aryl group and the aryloxy group, an unsubstituted phenyl group is preferable from the viewpoint of easy availability. It is, however, also possible to use one prepared by substituting a group selected from "an alkyl group, an alkoxy group, an alkenyl group, an alkenyloxy group, an alkynyl group and an alkynyloxy group (there

is no limitation in carbon number, but the typical carbon number is from 1 to 6)" at an arbitrary position of the phenyl group.

In addition, specifically, "in case of these groups having a fluorine atom" indicates that an H atom was replaced by an F atom in these groups.

Moreover, specifically, "in case of these groups having an oxygen atom" indicates that there is a group having "-0-" (ether bond) between carbon atoms in these groups.

The amount of the above-mentioned first compound to be added is preferably in a range between 0.01 and 5.0 mass % relative to a total amount of the electrolyte for non-aqueous electrolyte battery.

In addition, the amount of the above-mentioned second compound to be added is preferably in a range between 0.01 and 5.0 mass % relative to a total amount of the electrolyte for non-aqueous electrolyte battery.

Moreover, it is preferable that the group represented by $R^1$ to $R^6$ of the above-mentioned general formula (1) and the group represented by $R^7$ and $R^8$ of the above-mentioned general formula (2) are respectively independently a group selected from a methyl group, an ethyl group, a propyl group, a vinyl group, an aryl group and a fluorine-containing alkoxy group.

Furthermore, it is preferable that the group represented by $R^1$ to $R^6$ of the above-mentioned general formula (1) and the group represented by $R^7$ and $R^8$ of the above-mentioned general formula (2) are respectively independently a group selected from a methyl group, an ethyl group, a propyl group, a 2,2-difluoroethoxy group, a 2,2,2-trifluoroethoxy group, a 2,2,3,3-tetrafluoropropoxy group, a 2,2,3,3,3-pentafluoropropoxy group, a 1,1,1-trifluoroisopropoxy group and a 1,1,1,3,3,3-hexafluoroisopropoxy group.

In addition, as already mentioned, as the above-mentioned second compound, a siloxane compound containing at least one fluorine-containing alkoxy group, which is represented by the general formula (3) or the general formula (4), is particularly preferable.

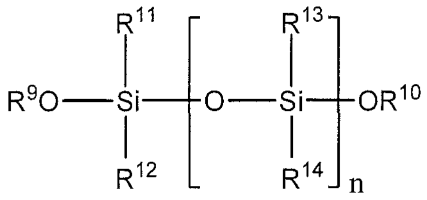 (3) 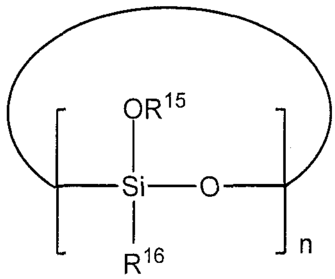 (4)

[In the general formula (3) and the general formula (4), each of $R^9$, $R^{10}$ and $R^{15}$ independently represents a group having at least one fluorine atom selected from an alkyl group, an alkenyl group, an alkynyl group and an aryl group. These groups may have an oxygen atom. Each of $R^{11}$ to $R^{14}$ and $R^{16}$ independently represents a group selected from an alkyl group, an alkoxy group, an alkenyl group, an alkenyloxy group, an alkynyl group, an alkynyloxy group, an aryl group and an aryloxy group. These groups may have a fluorine atom and an oxygen atom. In addition, n represents an integral number from 1 to 10. In case that n is 2 or greater, plural of $R^{13}$, $R^{14}$, $R^{15}$ or $R^{16}$ may respectively be the same or different.]

There is no specific limitation in carbon number of these alkyl group, alkoxy group, alkenyl group, alkenyloxy group, alkynyl group and alkynyloxy group. However, considering easy availability of raw materials, it is usually from 1 to 6. Especially, it is possible to preferably use a group having the carbon number of 1 to 3. In addition, in case that the carbon number is 3 or greater, it is also possible to use one of a branched chain or cyclic structure.

As "aryl" part of the aryl group and the aryloxy group, an unsubstituted phenyl group is preferable from the viewpoint of easy availability. It is, however, also possible to use one prepared by substituting a group selected from "an alkyl group, an alkoxy group, an alkenyl group, an alkenyloxy group, an alkynyl group and an alkynyloxy group (there is no limitation in carbon number, but the typical carbon number is from 1 to 6)" at an arbitrary position of the phenyl group.

In addition, specifically, "in case that these groups have a fluorine atom" indicates that an H atom was replaced by an F atom in these groups.

Moreover, specifically, "in case that these groups have an oxygen atom" indicates that there is a group having "-O-" (ether bound) between carbon atoms in these groups.

In addition, the above-mentioned solute is preferably at least one solute selected from the group consisting of lithium hexafluorophosphate ($LiPF_6$), lithium tetrafluoroborate ($LiBF_4$), lithium bis(trifluoromethanesulfonyl)imide ($LiN(CF_3SO_2)_2$), lithium bis(fluorosulfonyl)imide ($LiN(FSO_2)_2$), lithium bis(pentafluoroethanesulfonyl)imide ($LiN(C_2F_5SO_2)_2$), lithium difluorophosphate ($LiPO_2F_2$) and lithium bis(oxalato)borate ($LiB(C_2O_4)_2$).

Moreover, the above-mentioned non-aqueous solvent is preferably at least one non-aqueous solvent selected from the group consisting of cyclic carbonates, chain carbonates, cyclic esters, chain esters, cyclic ethers, chain ethers, sulfones or sulfoxide compounds and ion liquids.

Furthermore, in a non-aqueous electrolyte battery having at least a cathode, an anode and an electrolyte for a non-aqueous electrolyte battery, the present invention provides a non-aqueous electrolyte battery characterized by that an electrolyte for non-aqueous electrolyte battery is the above-mentioned electrolyte for non-aqueous electrolyte battery.

EFFECTS OF THE INVENTION

According to the present invention, even if it is an electrolyte for non-aqueous electrolyte battery prepared by adding at least one compound selected from the group consisting of lithium difluoro(bis(oxalato))phosphate, lithium tetrafluoro(oxalato)phosphate and lithium difluoro(oxalato)borate, it is possible to reduce the concentration of the free acid after preparing the electrolyte. Furthermore, a non-aqueous electrolyte battery prepared by using the electrolyte for non-aqueous electrolyte battery is able to suppress lowering of the initial electric capacity. In addition to such improvement of the initial characteristic, the non-aqueous electrolyte battery having the structure also shows a tendency that storage stability (maintenance rate of capacity after a long period of time), the low temperature characteristic, etc. are superior, and exhibits well-balanced superior performances as a whole battery.

In addition, as the siloxane compound, in case of using a specific "siloxane containing a fluorine-containing alkoxy group", the rate of the siloxane compound remaining after a long period of time improves more remarkably. As a result, the storage stability of the non-aqueous electrolyte becomes higher.

DETAILED DESCRIPTION

In the following, the present invention is explained in detail. However, the explanation of constituent elements written in the following is an example of embodiment of the present invention. Therefore, it is not limited by these specific contents. It is possible to conduct changing variously in a range of the point.

The electrolyte for non-aqueous electrolyte battery of the present invention provides an electrolyte for non-aqueous electrolyte battery containing a non-aqueous solvent and a solute, the electrolyte for non-aqueous electrolyte battery being characterized by that at least one compound selected from the group consisting of lithium difluoro(bis(oxalato))phosphate, lithium tetrafluoro(oxalato)phosphate and lithium difluoro(oxalato)borate as a first compound and at least one siloxane compound represented by the above-mentioned general formula (1) or general formula (2) as a second compound are contained in the electrolyte.

In the above-mentioned general formula (1) or general formula (2), as an alkyl group and an alkoxy group represented by $R^1$ to $R^8$, it is possible to cite an alkyl group having a carbon atom number of 1 to 12 such as methyl, ethyl, propyl, isopropyl, butyl, secondary butyl, tertiary butyl, pentyl, etc. or an alkoxy group derived from these groups. As an alkenyl group and an alkenyloxy group, it is possible to cite an alkenyl group having a carbon atom number of 2 to 8 such as vinyl, allyl, 1-propenyl, isopropenyl, 2-butenyl, 1,3-butadienyl, etc. or an alkenyloxy group derived from these groups. As an alkynyl group and an alkynyloxy group, it is possible to cite an alkynyl group having a carbon atom number of 2 to 8 such as ethynyl, 2-propynyl, 1,1-dimethyl-2-propynyl, etc. or an alkynyloxy group derived from these groups. As an aryl group and an aryloxy group, it is possible to cite an aryl group having a carbon atom number of 6 to 12 such as phenyl, tolyl, xylyl, etc. or an aryloxy group derived from these groups. In addition, the above-mentioned groups may have a fluorine atom and an oxygen atom.

As a siloxane compound represented by the above-mentioned general formula (1) or general formula (2), more specifically, for example, it is possible to cite the following compounds from No.1 to No.20, etc. However, the siloxane compound used in the present invention is not limited by the following examples.

Compound No. 1

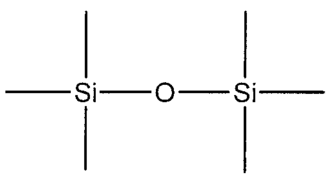

Compound No. 2

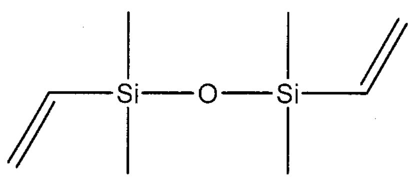

Compound No. 3

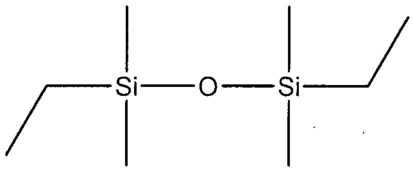

Compound No. 4

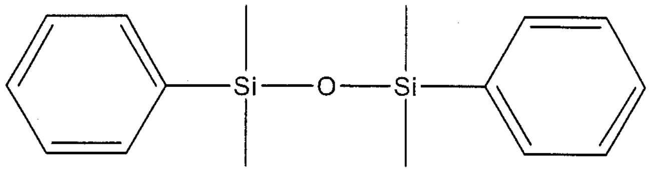

Compound No. 5

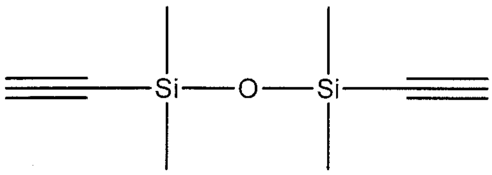

Compound No. 6

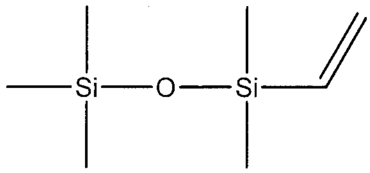

Compound No. 7

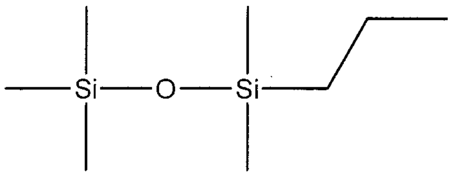

Compound No. 8

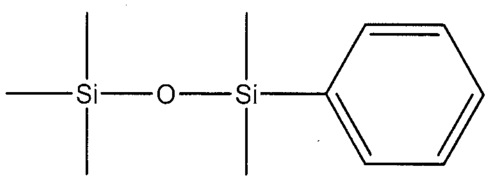

Compound No. 9

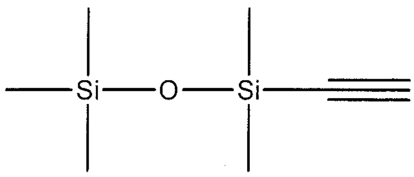

Compound No. 10

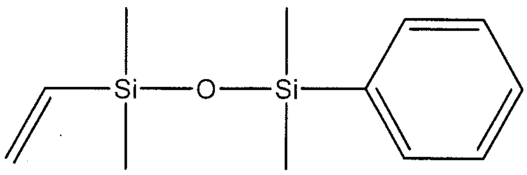

Compound No. 11

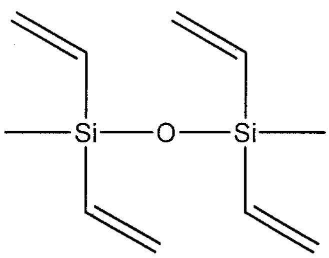

Compound No. 12

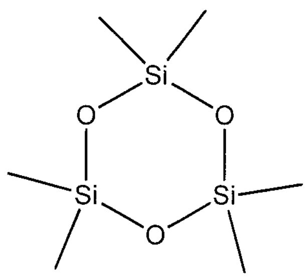

Compound No. 13

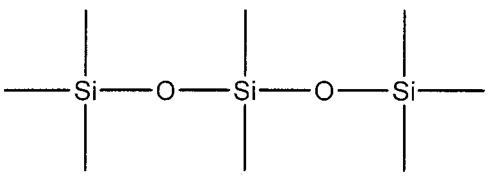

Compound No. 14

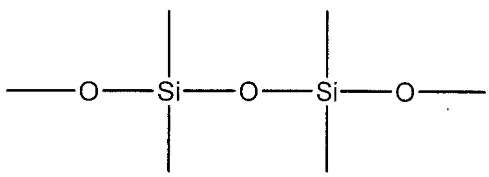

Compound No. 15

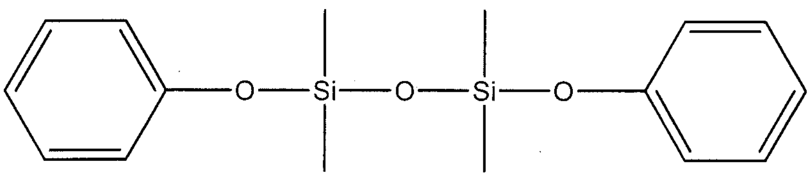

Compound No. 16

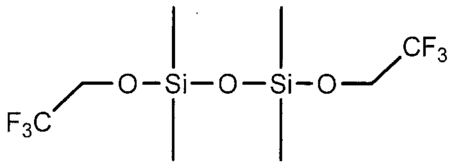

Compound No. 17

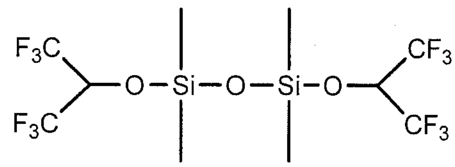

Compound No. 18

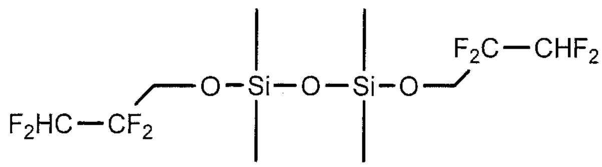

Compound No. 19

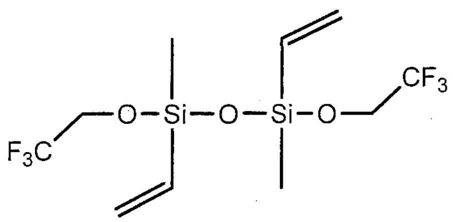

Compound No. 20

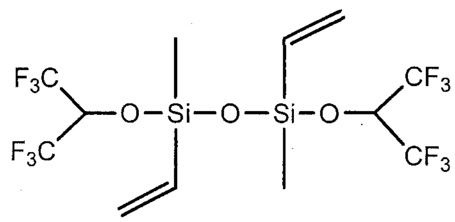

As it is clear from these examples, in case of siloxane of (1), for convenience in synthesis, such siloxane having a symmetrical structure is a preferable example, because a compound, in which $R^2$ and $R^5$ are equal, and $R^1$, $R^3$, $R^4$ and $R^6$ are all equal, is easy to be obtained. However, there is no limitation in the use even if the siloxane is asymmetrical.

In addition, groups represented by $R^1$ to $R^6$ of the above-mentioned general formula (1) and groups represented by $R^7$ and $R^8$ of the above-mentioned general formula (2) are preferably groups which do not contain a polymerizable functional group such as an alkenyl group including a vinyl group and an alkynyl group including an ethynyl group. If the group includes a polymerizable functional group, there is a tendency that resistance becomes relatively large when a film is formed on an electrode. It is preferable that the groups represented by $R^1$ to $R^6$ of the above-mentioned general formula (1) and the groups represented by $R^7$ and $R^8$ of the above-mentioned general formula (2) are alkyl groups due to a tendency that the above-mentioned resistance is smaller. It is preferable that the group is especially selected from a methyl group, an ethyl group and a propyl group, because a non-aqueous electrolyte battery superior in cycle characteristic and low temperature characteristic can be obtained.

Furthermore, as mentioned above, in case of using the siloxanes containing a fluorine-containing alkoxy group represented by the above-mentioned general formulas (3) and (4), in addition to the improvement of the above-mentioned battery characteristics, the present inventors discovered that the rate of the siloxane compound remaining after a long period of time has a remarkable improvement. As a result, it became clear that storage stability of the non-aqueous electrolyte is further improved and the maintenance rate of capacity after conducting charging and discharging cycle for a long time becomes higher (the increase of the internal resistance is suppressed). A mechanism of the improvement of storage stability of the siloxane compound in the electrolyte has not been clear. It is, however, assumed that one reason therefor is that electrons on an oxygen atom sandwiched between silicon atoms were dispersed by introducing an alkoxy group containing a fluorine atom as an electron-withdrawing group into a siloxane compound, thereby greatly

reducing reactivity with a solute such as $LiPF_6$, etc.

As the above-mentioned fluorine-containing alkoxy group, in the above "alkyl group, alkoxy group, alkenyl group, alkenyloxy group, alkynyl group and alkynyloxy group" (the carbon number is usually from 1 to 6), it is possible to cite a group in which at least one of the H atoms was replaced by an F atom. All of the H atoms may be replaced by F atoms. However, it is unnecessary, and a group in which a part of them was replaced by an F atom is also used preferably. As such "fluorine-containing alkoxy group", it is possible to cite a 2,2-difluoroethoxy group, a 2,2,2-trifluoroethoxy group, a 2,2,3,3-tetrafluoropropoxy group, a 2,2,3,3,3-pentafluoropropoxy group, a 1,1,1-trifluoroisopropoxy group and a 1,1,1,3,3,3-hexafluoroisopropoxy group. Especially, a 2,2-difluoroethoxy group, a 2,2,2-trifluoroethoxy group, a 2,2,3,3,-tetrafluoropropoxy group and a 1,1,1,3,3,3-hexafluoroisopropoxy group are preferable.

As the siloxanes containing a fluorine-containing alkoxy group represented by the general formula (3) and (4) mentioned above, more specifically, for example, it is possible to cite the following compounds from No.16 to No.31, etc.

Compound No. 16

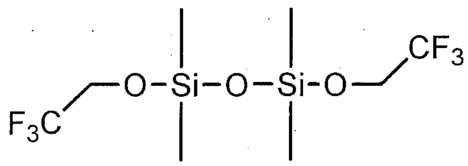

Compound No. 17

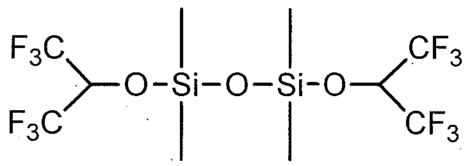

Compound No. 18

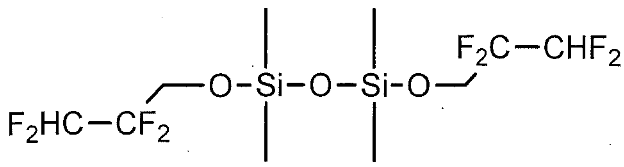

Compound No. 19

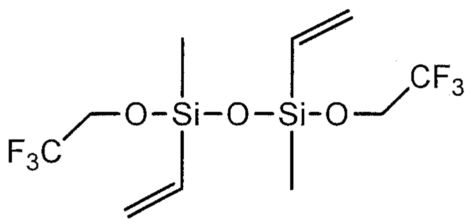

Compound No. 20

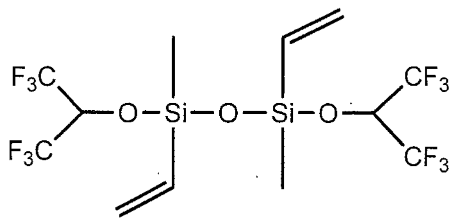

Compound No. 21

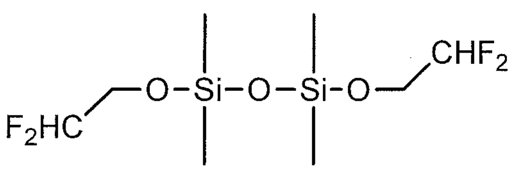

Compound No. 22

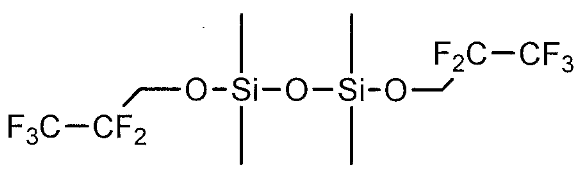

Compound No. 23

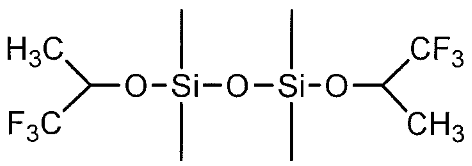

Compound No. 24

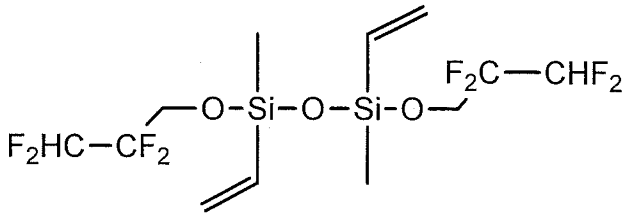

Compound No. 25

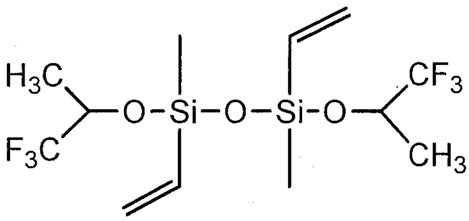

Compound No. 26

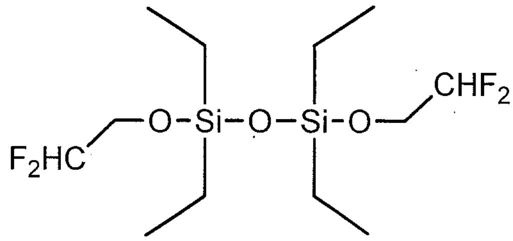

Compound No. 27

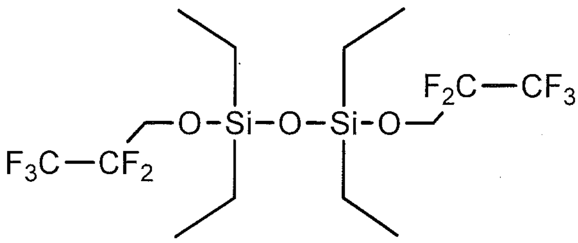

Compound No. 28

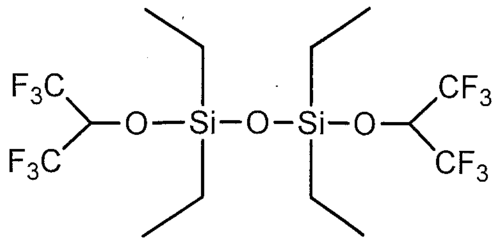

Compound No. 29

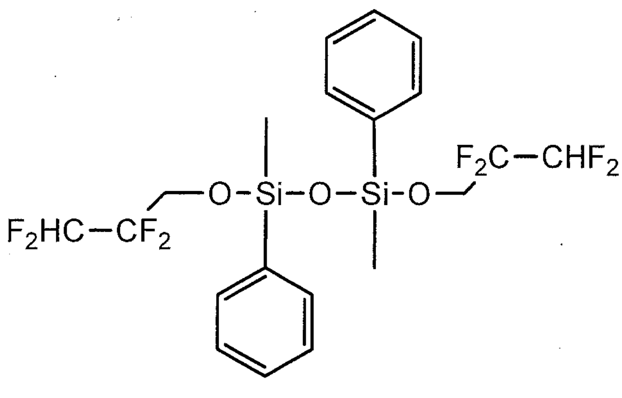

Compound No. 30

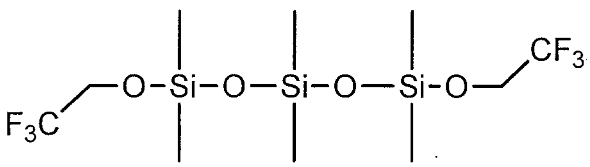

Compound No. 31

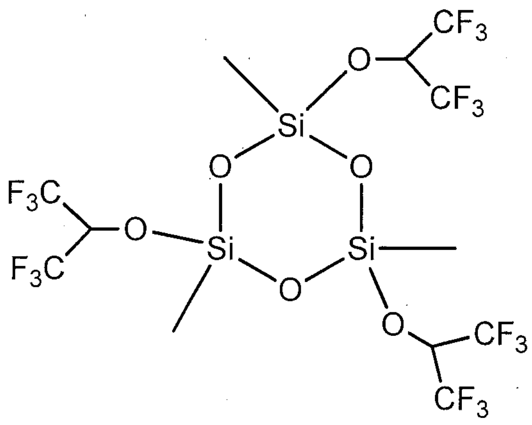

Any compound, which is used as the first compound, of lithium difluoro(bis(oxalato))phosphate, lithium tetrafluoro(oxalato)phosphate and lithium difluoro(oxalato)borate is decomposed on the cathode and the anode, thereby forming films having a good lithium ion conductivity on the cathode and anode surfaces. This film suppresses deterioration of the battery performance by preventing decomposition of the non-aqueous solvent and the solute by suppressing a direct contact between the non-aqueous solvent or the solute and the active materials. However, there is a case that it is not possible to say that a film having a sufficiently excellent durability is formed by only these first compounds. Furthermore, there is a case that the initial electric capacity of the non-aqueous electrolyte battery becomes low due to that a side reaction of the first compound occurs. In addition, the siloxane compound used as the second compound also has an effect of suppressing deterioration of the battery by forming stable films on the cathode and anode surfaces. In the electrolyte for non-aqueous electrolyte battery of the present invention, there are not clear the details of the mechanism that the initial electric capacity improves by using both of the first compound and the second compound, as compared with the case of adding the first compound singly. This is assumed because side reactions of the first compound are suppressed by the formation of a film having a good composition by mixing the first compound with the second compound or because side reactions of the first compound are suppressed by covering the surface of a film formed by the first compound with a film formed by the second compound, by the coexistence of the first compound and the second compound. In this way, it is assumed that the film formed from the first compound and the second compound is excellent in lithium ion conductivity and superior in durability, as compared with films formed by them singly, thereby resulting in achieving the improvements of cycle characteristic and low temperature characteristic of the battery, which cannot be achieved by them singly. In addition, there is a tendency of the decrease of the free acid concentration in the electrolyte by adding the above-mentioned second compound into the electrolyte. As a result, an electrolyte having the decreased free acid concentration can be obtained. Therefore, it is preferable.

The amount of the first compound to be added is 0.01 mass % or greater, preferably 0.05 mass % or greater, more preferably 0.1 mass % or greater, relative to the total amount of the non-aqueous electrolyte. In addition, the upper limit is 5.0 mass % or less, preferably 4 mass % or less, more preferably 3 mass % or less. If the addition amount is under 0.01 mass %, it is difficult to sufficiently obtain the effects of improving cycle characteristic and suppressing the increase of internal resistance of a non-aqueous electrolyte battery prepared by using the electrolyte. Therefore, it is not preferable. On the other hand, if the addition amount is over 5.0 mass %, the remaining first compound not used in the film formation tends to generate a gas by a decomposition reaction except the film formation reaction. This tends to cause swelling and deterioration of the performance of the battery. Therefore, it is not preferable. As long as it is a range not exceeding 5.0 mass %, one kind of these first compounds may be used singly. Alternatively, two kinds or more of them may be used by mixing at an arbitrary combination and an arbitrary ratio for purposes.

The amount of the second compound to be added is 0.01 mass % or greater, preferably 0.05 mass % or greater, more preferably 0.1 mass % or greater, relative to the total amount of the non-aqueous electrolyte. In addition, the upper limit is 5.0 mass % or less, preferably 4 mass % or less, more preferably 3 mass % or less. If the addition amount is under 0.01 mass %, it is difficult to sufficiently obtain the effect of improving the electric capacity of a non-aqueous electrolyte battery prepared by using the non-aqueous electrolyte. Therefore, it is not preferable. On the other hand, if the addition amount is over 5.0 mass %, deterioration of low temperature characteristic of a non-aqueous electrolyte battery prepared by using the non-aqueous electrolyte occurs easily. Therefore, it is not preferable. As long as it is a range not exceeding 5.0 mass %, one kind of these second compounds may be used singly. Alternatively, two kinds or greater of them may be used by mixing at an arbitrary combination and an arbitrary ratio for purposes.

The kind of a non-aqueous solvent used in the electrolyte for non-aqueous electrolyte battery of the present

invention is not especially limited. Therefore, it is possible to use an arbitrary non-aqueous solvent. As specific examples, it is possible to cite cyclic carbonates such as propylene carbonate, ethylene carbonate, butylene carbonate, etc., chain carbonates such as diethyl carbonate, dimethyl carbonate, ethyl methyl carbonate, etc., cyclic esters such as γ-butyrolactone, γ-valerolactone, etc., chain esters such as methyl acetate, methyl propionate, etc., cyclic ethers such as tetrahydrofuran, 2-methyltetrahydrofuran, dioxane, etc., chain ethers such as dimethoxyethane, diethyl ether, sulfones or sulfoxide compounds such as dimethyl sulfoxide, sulfolane, etc., and the like. In addition, although category is different from non-aqueous solvent, it is also possible to cite ion liquid, etc. Moreover, one kind of non-aqueous solvents used in the present invention may be used singly. Alternatively, two kinds or greater of them may be used by mixing at an arbitrary combination and an arbitrary ratio for purposes. Of these, from the viewpoint of electrochemical stability relative to the oxidation reduction and chemical stability relative to heat and the reaction with the above-mentioned solute, propylene carbonate, ethylene carbonate, diethyl carbonate, dimethyl carbonate and ethyl methyl carbonate are especially preferable.

The kind of the above-mentioned solute used in the electrolyte for non-aqueous electrolyte battery of the present invention is not especially limited. It is possible to use an arbitrary fluorine-containing lithium salt, etc. As specific examples, it is possible to cite electrolyte lithium salts represented by $LiPF_6$, $LiBF_4$, $LiClO_4$, $LiAsF_6$, $LiSbF_6$, $LiCF_3SO_3$, $LiN(CF_3SO_2)_2$, $LiN(FSO_2)_2$, $LiN(C_2F_5SO_2)_2$, $LiN(CF_3SO_2)(C_4F_9SO_2)$, $LiC(CF_3SO_2)_3$, $LiPF_3(C_3F_7)_3$, $LiB(CF_3)_4$, $LiBF_3(C_2F_5)$, $LiPO_2F_2$, etc. One kind of these solutes may be used singly. Alternatively, two kinds or greater of them may be used by mixing at an arbitrary combination and an arbitrary ratio for purposes. Of these, considering energy density, output characteristic, life, etc. as a battery, $LiPF_6$, $LiBF_4$, $LiN(CF_3SO_2)_2$, $LiN(FSO_2)_2$, $LiN(C_2F_5SO_2)_2$, and $LiPO_2F_2$ are preferable.

Of these, lithium hexafluorophosphate ($LiPF_6$), which is commercially used in large quantities, is one of especially preferable ones as a solute used in the present invention.

There is no particular limitation in concentration of these solutes. It is, however, in a range that the lower limit is 0.5 mol/L or greater, preferably 0.7 mol/L or greater, more preferably 0.9 mol/L or greater, and the upper limit is 2.5 mol/L or less, preferably 2.0 mol/L or less, more preferably 1.5 mol/L or less. If it is under 0.5 mol/L, cycle characteristic and output characteristic of the non-aqueous electrolyte battery tend to decrease by lowering of ionic conductivity. On the other hand, if it is over 2.5 mol/L, the ionic conductivity also tends to decrease by the increase of viscosity of the electrolyte for non-aqueous electrolyte battery. Therefore, there is a fear about decreasing the cycle characteristic and the output characteristic of the non-aqueous electrolyte battery.

If a large quantity of the solute is dissolved into the non-aqueous solvent at one time, temperature of the non-aqueous electrolyte may rise by heat of dissolution of the solute. If the liquid temperature rises sharply, there is a fear about that hydrogen fluoride is produced by accelerating decomposition of the fluorine-containing lithium salt. The hydrogen fluoride becomes a cause of deterioration of the battery performance. Therefore, it is not preferable. For this reason, there is no particular limitation in the temperature of the non-aqueous electrolyte when the solute is dissolved into the non-aqueous solvent; it is, however, preferably from -20 to 80 °C, more preferably from 0 to 60 °C.

The above is an explanation of a basic structure of the electrolyte for non-aqueous electrolyte battery of the present invention. However, as long as the point of the present invention is not damaged, an additive generally used in the electrolyte for non-aqueous electrolyte battery of the present invention may be added at an arbitrary ratio. As specific examples, it is possible to cite compounds having an overcharge prevention effect, an anode film-forming effect and a cathode protective effect, such as cyclohexylbenzene, biphenyl, t-butylbenzene, vinylene carbonate, vinylethylene carbonate, difluoroanisole, fluoroethylene carbonate, propane sultone, dimethylvinylene carbonate, etc. In addition, it is also possible to use an electrolyte for non-aqueous electrolyte battery coagulated by a gelling agent and a cross-linked polymer in such a case of using in a non-aqueous electrolyte battery called a lithium polymer battery.

Next, structure of the non-aqueous electrolyte battery of the present invention is explained. The non-aqueous electrolyte battery of the present invention is characterized by using the above-mentioned electrolyte for non-aqueous electrolyte battery of the present invention, and parts used in general non-aqueous electrolyte batteries are used for other structural parts. That is, it is comprised of a cathode and an anode, which are able to occlude and release lithium, an electric collector, a separator, a container, etc.

As the anode material, there is no particular limitation. It is possible to use lithium metal, alloys or intermetallic compounds of lithium and other metals and various carbon materials, artificial graphite, natural graphite, metal oxides, metal nitrides, tin (a simple substance), tin compounds, silicon (a simple substance), silicon compounds, activated carbons, electroconductive polymers, etc.

As the cathode material, there is no particular limitation. In cases of lithium batteries and lithium ion batteries, for example, it is possible to use lithium-containing transition metal composite oxides, such as $LiCoO_2$, $LiNiO_2$, $LiMnO_2$, $LiMn_2O_4$, etc., those in which a plurality of transition metals, such as Co, Mn, Ni, etc., of those lithium-containing transition metal composite oxides have been mixed, those in which a part of transition metals of those lithium-containing transition metal composite oxides have been replaced by other metals except transition metals, phosphate compounds of transition metals called olivine, such as $LiFePO_4$, $LiCoPO_4$, $LiMnPO_4$, etc., oxides, such as $TiO_2$, $V_2O_5$, $MoO_3$, etc., sulfides, such as $TiS_2$, FeS, etc., or electroconductive polymers such as polyacetylene, polyparaphenylene, polyaniline, polypyrrole,

etc., activated carbons, polymers which generate radicals, carbon materials, etc.

It is possible to make an electrode sheet by adding acetylene black, Ketjen black, a carbon fibre and graphite as an electroconductive material, and polytetrafluoroethylene, polyvinylidene fluoride, SBR resin, etc. as a binding material to the cathode and anode materials, and then forming into a sheet.

As a separator to prevent a contact between the cathode and the anode, nonwoven fabrics and porous sheets made of polypropylene, polyethylene, paper, glass fibre, etc. are used.

From each of the elements as above, it is possible to assemble a non-aqueous electrolyte battery having a shape such as coin shapes, cylinder shapes, square shapes, aluminium laminate sheet types, etc.

EXAMPLES

In the following, the present invention is specifically explained according to Examples, but the present invention is not limited by Examples.

[Example 1-1]

As shown in Table 1, using a mixed solvent, in which volume ratio of ethylene carbonate to ethyl methyl carbonate was 1 : 2, as a non-aqueous solvent, an electrolyte for non-aqueous electrolyte battery was prepared by dissolving 1.0 mol/L of $LiPF_6$ as a solute, 0.01 mass % of lithium difluoro(bis(oxalato))phosphate as a first compound and 1 mass % of the above-mentioned compound No.1 as a second compound into the solvent. In addition, the above-mentioned preparation was conducted while keeping temperature of the electrolyte at 25 °C. 1 hour later after the above-mentioned preparation, concentration of a free acid in the electrolyte was 54 mass ppm. 24 hours later after the preparation, concentration of a free acid in the electrolyte was 2 mass ppm. In addition, measurement of the free acid was conducted by titration.

Using this electrolyte, a cell was made from $LiCoO_2$ as a cathode material and graphite as an anode material. Initial electric capacity, cycle characteristic, internal resistance characteristic and low temperature characteristic of the battery were actually evaluated. A test cell was made as follows.

5 mass % of polyvinylidene fluoride (PVDF) as a binder and 5 mass % of acetylene black as a conductive material were mixed into 90 mass % of $LiCoO_2$ powder, followed by adding N-methylpyrrolidone, and then forming into a paste shape. A test cathode body was made by applying this paste onto an aluminium foil and then drying. In addition, 10 mass % of polyvinylidene fluoride (PVDF) as a binder was mixed into 90 mass % of graphite powder, followed by adding N-methylpyrrolidone, and then forming into a slurry shape. A test anode body was made by applying this slurry onto a copper foil and then drying for 12 hours at 150 °C. Then, 50 mAh cell having an aluminium laminate exterior was assembled by impregnating a separator made of polyethylene with the electrolyte.

[Initial electric capacity]

Using the cell which had been made, after charging until 4.2 V at a current density of 0.35 $mA/cm^2$, discharging was conducted until 3.0 V at a current density of 0.35 $mA/cm^2$. Initial discharging capacity at this time was defined as initial electric capacity. In addition, measurement was conducted at an environmental temperature of 25 °C.

[High temperature cycle characteristic]

Using the above-mentioned cell, a charging and discharging test was conducted at an environmental temperature of 60 °C, and cycle characteristic was evaluated. Both of the charging and the discharging were conducted at 0.35 $mA/cm^2$ of current density. After reaching 4.2 V, 4.2 V was kept for 1 hour in charging, and the discharging was conducted until 3.0 V, thereby repeating the charging and discharging cycle. Then, degree of deterioration of the cell was evaluated by maintenance rate of discharging capacity after 500 cycles (cycle characteristic evaluation). The maintenance rate of the discharging capacity was calculated by the following formula. The result is shown in Table 2.

<Maintenance rate of discharging capacity after 500 cycles>

Maintenance rate of discharging capacity (%) = (discharging capacity after 500 cycles/initial discharging capacity) $\times$ 100

[Internal resistance characteristic (25 °C)]

A cell after the cycle test was charged until 4.2 V at 0.35 $mA/cm^2$ of current density at an environmental

temperature of 25 °C. After that, internal resistance of the battery was measured.

[Low temperature characteristic evaluation]

Discharging capacity and internal resistance of the cell at an environmental temperature of -20 °C was measured. Charging and discharging of the cell was conducted at 0.35 mA/$cm^2$ of current density, a charge termination voltage was set at 4.2 V, and a discharge termination voltage was set at 3.0 V

[Table 1]

| | Electrolyte No. | First compound | | Second compound | | Concentration of free acid (mass ppm) | |
|---|---|---|---|---|---|---|---|
| | | Compound name | Concentration (mass %) | Compound No. | Concentration (mass %) | 1 hr after preparation | 24 hr after preparation |
| Example 1-1 | 1-1 | Lithium difluoro (bis(oxalato)) phosphate | 0.01 | No.1 | 1 | 54 | 2 |
| Example 1-2 | 1-2 | | 0.05 | | 1 | 53 | 1 |
| Example 1-3 | 1-3 | | 0.5 | | 1 | 55 | 2 |
| Example 1-4 | 1-4 | | 1 | | 0.01 | 54 | 41 |
| Example 1-5 | 1-5 | | 1 | | 0.05 | 54 | 3 |
| Example 1-6 | 1-6 | | 1 | | 0.5 | 56 | 2 |
| Example 1-7 | 1-7 | | 1 | | 1 | 55 | 3 |
| Example 1-8 | 1-8 | | 1 | | 2 | 54 | 2 |
| Example 1-9 | 1-9 | | 1 | | 4 | 53 | 1 |
| Example 1-10 | 1-10 | | 1 | | 5 | 55 | 1 |
| Example 1-11 | 1-11 | | 3 | | 1 | 54 | 1 |
| Example 1-12 | 1-12 | | 4 | | 1 | 55 | 3 |
| Example 1-13 | 1-13 | | 5 | | 1 | 55 | 2 |
| Example 1-14 | 1-14 | | 0.002 | | 1 | 52 | 2 |
| Example 1-15 | 1-15 | | 7 | | 1 | 54 | 3 |
| Example 1-16 | 1-16 | | 10 | | 2 | 56 | 2 |
| Example 1-17 | 1-17 | | 1 | | 0.002 | 52 | 49 |
| Example 1-18 | 1-18 | | 1 | | 7 | 55 | 1 |
| Example 1-19 | 1-19 | | 1 | | 10 | 54 | 1 |
| Example 1-20 | 1-20 | | 1 | No.2 | 2 | 53 | 3 |
| Example 1-21 | 1-21 | | 1 | No.3 | 2 | 52 | 2 |
| Example 1-22 | 1-22 | | 1 | No.4 | 2 | 55 | 1 |
| Example 1-23 | 1-23 | | 1 | No.5 | 2 | 54 | 3 |
| Example 1-24 | 1-24 | | 1 | No.6 | 2 | 54 | 3 |
| Example 1-25 | 1-25 | | 1 | No.7 | 2 | 56 | 2 |
| Example 1-26 | 1-26 | | 1 | No.8 | 2 | 55 | 1 |
| Example 1-27 | 1-27 | | 1 | No.9 | 2 | 55 | 3 |
| Example 1-28 | 1-28 | | 1 | No.10 | 2 | 54 | 2 |

(continued)

| | Electrolyte No. | First compound | | Second compound | | Concentration of free acid (mass ppm) | |
|---|---|---|---|---|---|---|---|
| | | Compound name | Concentration (mass %) | Compound No. | Concentration (mass %) | 1 hr after preparation | 24 hr after preparation |
| Example 1-29 | 1-29 | Lithium tetrafluoro (oxalato) phosphate | 1 | No.1 | 2 | 53 | 1 |
| Example 1-30 | 1-30 | | 1 | No.2 | 2 | 52 | 3 |
| Example 1-31 | 1-31 | | 1 | No.11 | 2 | 53 | 3 |
| Example 1-32 | 1-32 | | 1 | No.12 | 2 | 54 | 2 |
| Example 1-33 | 1-33 | Lithium difluoro(oxalato) borate | 1 | No.1 | 2 | 55 | 1 |
| Example 1-34 | 1-34 | | 1 | No.2 | 2 | 56 | 3 |
| Example 1-35 | 1-35 | | 1 | No.13 | 2 | 55 | 2 |
| Example 1-36 | 1-36 | | 1 | No.14 | 2 | 54 | 2 |
| Example 1-37 | 1-37 | | 1 | No.15 | 2 | 55 | 1 |
| Comparative Example 1-1 | 1-38 | Lithium difluoro (bis(oxalato)) phosphate | 1 | None | 0 | 56 | 56 |
| Comparative Example 1-2 | 1-39 | Lithium tetrafluoro (oxalato) phosphate | 1 | None | 0 | 55 | 56 |
| Comparative Example 1-3 | 1-40 | Lithium difluoro(oxalato) borate | 1 | None | 0 | 55 | 55 |
| Comparative Example 1-4 | 1-41 | None | 0 | No.1 | 2 | 53 | 1 |
| Comparative Example 1-5 | 1-42 | None | 0 | No.2 | 2 | 52 | 3 |
| Comparative Example 1-6 | 1-43 | None | 0 | None | 0 | 53 | 55 |

[Table 2]

| | Electrolyte No. | Initial discharging capacity 1) | Maintenance rate of capacity after 500 cycles (%) | Internal resistance (25 °C) 1) | Low temperature characteristic (-20 °C) | |
|---|---|---|---|---|---|---|
| | | | | | Discharging capacity 1) | Internal resistance 1) |
| Example 1-1 | 1-1 | 105 | 83 | 95 | 106 | 94 |
| Example 1-2 | 1-2 | 109 | 85 | 93 | 109 | 92 |
| Example 1-3 | 1-3 | 115 | 87 | 91 | 113 | 91 |
| Example 1-4 | 1-4 | 107 | 84 | 95 | 107 | 94 |
| Example 1-5 | 1-5 | 108 | 86 | 93 | 109 | 92 |
| Example 1-6 | 1-6 | 113 | 88 | 90 | 113 | 89 |
| Example 1-7 | 1-7 | 112 | 89 | 90 | 115 | 88 |
| Example 1-8 | 1-8 | 112 | 88 | 89 | 115 | 88 |

(continued)

| | Electrolyte No. | Initial discharging capacity 1) | Maintenance rate of capacity after 500 cycles (%) | Internal resistance (25 °C) 1) | Low temperature characteristic (-20 °C) | |
|---|---|---|---|---|---|---|
| | | | | | Discharging capacity 1) | Internal resistance 1) |
| Example 1-9 | 1-9 | 110 | 86 | 93 | 108 | 93 |
| Example 1-10 | 1-10 | 107 | 83 | 96 | 106 | 95 |
| Example 1-11 | 1-11 | 111 | 89 | 89 | 113 | 87 |
| Example 1-12 | 1-12 | 108 | 85 | 94 | 109 | 92 |
| Example 1-13 | 1-13 | 105 | 84 | 95 | 107 | 94 |
| Example 1-14 | 1-14 | 104 | 80 | 97 | 103 | 96 |
| Example 1-15 | 1-15 | 103 | 81 | 97 | 105 | 96 |
| Example 1-16 | 1-16 | 102 | 80 | 98 | 104 | 97 |
| Example 1-17 | 1-17 | 104 | 82 | 98 | 105 | 96 |
| Example 1-18 | 1-18 | 104 | 82 | 97 | 103 | 98 |
| Example 1-19 | 1-19 | 103 | 81 | 98 | 103 | 98 |
| Example 1-20 | 1-20 | 109 | 83 | 96 | 105 | 96 |
| Example 1-21 | 1-21 | 113 | 87 | 90 | 113 | 89 |
| Example 1-22 | 1-22 | 111 | 87 | 91 | 112 | 89 |
| Example 1-23 | 1-23 | 108 | 83 | 96 | 105 | 97 |
| Example 1-24 | 1-24 | 109 | 82 | 97 | 104 | 96 |
| Example 1-25 | 1-25 | 112 | 88 | 90 | 113 | 89 |
| Example 1-26 | 1-26 | 112 | 88 | 91 | 112 | 90 |
| Example 1-27 | 1-27 | 109 | 82 | 97 | 104 | 96 |
| Example 1-28 | 1-28 | 108 | 82 | 97 | 104 | 97 |
| Example 1-29 | 1-29 | 113 | 85 | 93 | 110 | 89 |

(continued)

| | Electrolyte No. | Initial discharging capacity 1) | Maintenance rate of capacity after 500 cycles (%) | Internal resistance (25 °C) 1) | Low temperature characteristic (-20 °C) | |
|---|---|---|---|---|---|---|
| | | | | | Discharging capacity 1) | Internal resistance 1) |
| Example 1-30 | 1-30 | 109 | 81 | 96 | 105 | 96 |
| Example 1-31 | 1-31 | 108 | 81 | 97 | 103 | 97 |
| Example 1-32 | 1-32 | 112 | 83 | 93 | 110 | 91 |
| Example 1-33 | 1-33 | 113 | 85 | 94 | 112 | 89 |
| Example 1-34 | 1-34 | 109 | 80 | 96 | 105 | 96 |
| Example 1-35 | 1-35 | 111 | 84 | 95 | 109 | 89 |
| Example 1-36 | 1-36 | 112 | 85 | 94 | 110 | 89 |
| Example 1-37 | 1-37 | 112 | 84 | 95 | 109 | 90 |
| Comparative Example 1-1 | 1-38 | 100 | 78 | 100 | 100 | 100 |
| Comparative Example 1-2 | 1-39 | 98 | 73 | 102 | 100 | 103 |
| Comparative Example 1-3 | 1-40 | 100 | 74 | 101 | 101 | 103 |
| Comparative Example 1-4 | 1-41 | 105 | 68 | 107 | 65 | 149 |
| Comparative Example 1-5 | 1-42 | 104 | 67 | 107 | 66 | 140 |
| Comparative Example 1-6 | 1-43 | 104 | 54 | 137 | 61 | 148 |
| 1) A relative value provided that the result of Comparative Example 1-1 is 100 | | | | | | |

[Examples 1-2 to 1-37]

Electrolytes for non-aqueous electrolyte batteries were prepared by changing each of the kinds and the addition amounts of the first compound and the second compound in the above-mentioned Example 1-1. The same as Example 1-1, a cell was made by using this non-aqueous electrolyte, and a battery evaluation was conducted. A preparation condition of the non-aqueous electrolyte and concentration of a free acid in the electrolyte of 1 hour and 24 hours after the preparation are shown in Table 1. The result of the evaluation of a battery made by using the electrolyte is shown in Table 2. In addition, in Examples 1-15 and 1-16, it was observed that swelling of a laminate cell after the cycle test was larger compared with the cells of Examples 1-1 to 1-13, namely the amount of gas generation in the battery was relatively large. Battery performance of the cells of Examples 1-15 and 1-16 were superior to the cell of Comparative Example 1-1. However, the battery performance comparable to the cells of Examples 1-1 to 1-13 was not obtained due to an influence of gas generation.

[Comparative Examples 1-1 to 1-6]

The electrolytes of Comparative Examples 1-1 to 1-3 were prepared the same as the above-mentioned Example 1-1 except that the second compound was not added and that 1 mass % of lithium difluoro(bis(oxalato))phosphate, lithium tetrafluoro(oxalato)phosphate or lithium difluoro(oxalato)borate as the first compound was dissolved. The electrolytes of Comparative Examples 1-4 and 1-5 were prepared the same as the above-mentioned Example 1-1 except that the first compound was not added and that 2 mass % of the above-mentioned compound No.1 or compound No. 2 as the second compound was dissolved. The electrolyte of Comparative Example 1-6 was prepared the same as the above-mentioned Example 1-1 except that neither of the first compound and the second compound was added. A preparation condition of the non-aqueous electrolyte and concentration of a free acid in the electrolyte of 1 hour and 24 hours after the preparation are shown in Table 1. The result of the evaluation of a battery made by using the electrolyte is shown in Table 2.

Comparing the above results, even if an electrolyte is prepared by adding the first compound, it is possible to observe that the concentration of the free acid after preparing the electrolyte is remarkably suppressed if the electrolyte is prepared by further adding the second compound and using both of them.

Also, in "initial charging and discharging capacity", "maintenance rate of capacity after 500 cycles", "internal resistance at 25 °C" and "low temperature characteristic (discharging capacity, internal resistance) at -20 °C", "electrolyte prepared by using both of the first compound and the second compound" has shown a superior tendency. Therefore, it was shown that a well-balanced, excellent non-aqueous electrolyte battery can be obtained by using the electrolyte which has satisfied a structure of the present invention.

[Examples 1-38 to 1-43, Comparative Examples 1-7 to 1-10]

The anode body used in Example 1-1 was changed, and using a non-aqueous electrolyte No.1-8, 1-20, 1-32, 1-38 or 1-42 as an electrolyte for non-aqueous electrolyte battery, initial electric capacity, cycle characteristic, internal resistance characteristic and low temperature characteristic of the battery were evaluated the same as Example 1-1. In addition, in Examples 1-38 to 1-40 and Comparative Examples 1-7 and 1-8, in which an anode active material was $Li_4Ti_5O_{12}$, an anode body was made by applying an paste obtained by mixing 5 mass % of polyvinylidene fluoride (PVDF) as a binder and 5 mass % of acetylene black as a conductive material into 90 mass % of $Li_4Ti_5O_{12}$ powder and then adding N-methylpyrrolidone, on a copper foil and then drying. A charge termination voltage was set at 2.7 V and a discharge termination voltage was set at 1.5 V when the battery evaluation was conducted. In addition, in Examples 1-41 to 1-43 and Comparative examples 1-9 and 1-10, in which an anode active material was silicon (a simple substance), an anode body was made by applying a paste obtained by mixing 5 mass % of polyvinylidene fluoride (PVDF) as a binder and 15 mass % of acetylene black as a conductive material into 80 mass % of silicon powder and then adding N-methylpyrrolidone, on a copper foil and then drying. A charge termination voltage and a discharge termination voltage were set as the same as Example 1-1 when the battery evaluation was conducted. Initial electric capacity, cycle characteristic, internal resistance characteristic and low temperature characteristic of the above-mentioned battery are shown in Table 3.

[Table 3]

| | Electrolyte No. | Cathode active material | Anode active material | Initial discharging capacity 2) | Maintenance rate of capacity after 500 cycles (%) | Internal resistance (25 °C) 2) | Low temperature characteristic (-20 °C) | |
|---|---|---|---|---|---|---|---|---|
| | | | | | | | Discharging capacity 2) | Internal resistance 2) |
| Example 1-38 | 1-8 | $LiCoO_2$ | $Li_4Ti_5O_{12}$ | 115 | 86 | 91 | 116 | 88 |
| Example 1-39 | 1-20 | | | 110 | 83 | 95 | 108 | 94 |
| Example 1-40 | 1-32 | | | 115 | 86 | 93 | 116 | 88 |
| Comparative Example 1-7 | 1-38 | | | 100 | 76 | 100 | 100 | 100 |
| Comparative Example 1-8 | 1-42 | | | 105 | 68 | 106 | 85 | 104 |
| Example 1-41 | 1-8 | | Silicon (simple substance) | 114 | 88 | 92 | 117 | 88 |
| Example 1-42 | 1-20 | | | 109 | 84 | 95 | 109 | 93 |
| Example 1-43 | 1-32 | | | 113 | 86 | 92 | 116 | 87 |
| Comparative Example 1-9 | 1-38 | | | 100 | 75 | 100 | 100 | 100 |
| Comparative Example 1-10 | 1-42 | | | 104 | 68 | 105 | 86 | 105 |

(continued)

| | Electrolyte No. | Cathode active material | Anode active material | Initial discharging capacity 2) | Maintenance rate of capacity after 500 cycles (%) | Internal resistance (25 °C) 2) | Low temperature characteristic (-20 °C) | |
|---|---|---|---|---|---|---|---|---|
| | | | | | | | Discharging capacity 2) | Internal resistance 2) |
| Example 2-1 | 1-8 | $LiNi_{1/3}Co_{1/3}Mn_{1/3}O_2$ | Graphite | 116 | 89 | 91 | 117 | 87 |
| Example 2-2 | 1-20 | | | 110 | 85 | 95 | 110 | 93 |
| Example 2-3 | 1-32 | | | 115 | 88 | 92 | 116 | 88 |
| Comparative Example 2-1 | 1-38 | | | 100 | 77 | 100 | 100 | 100 |
| Comparative Example 2-2 | 1-42 | | | 105 | 69 | 106 | 85 | 104 |
| Example 2-4 | 1-8 | | $Li_4Ti_5O_{12}$ | 117 | 88 | 91 | 118 | 87 |
| Example 2-5 | 1-20 | | | 109 | 84 | 96 | 109 | 94 |
| Example 2-6 | 1-32 | | | 115 | 88 | 92 | 117 | 90 |
| Comparative Example 2-3 | 1-38 | | | 100 | 77 | 100 | 100 | 100 |
| Comparative Example 2-4 | 1-42 | | | 106 | 68 | 105 | 86 | 105 |
| Example 2-7 | 1-8 | | Silicon (simple substance) | 116 | 87 | 92 | 116 | 87 |
| Example 2-8 | 1-20 | | | 109 | 83 | 96 | 108 | 94 |
| Example 2-9 | 1-32 | | | 115 | 86 | 93 | 116 | 89 |
| Comparative Example 2-5 | 1-38 | | | 100 | 76 | 100 | 100 | 100 |
| Comparative Example 2-6 | 1-42 | | | 105 | 66 | 106 | 84 | 105 |

(continued)

| | Electrolyte No. | Cathode active material | Anode active material | Initial discharging capacity 2) | Maintenance rate of capacity after 500 cycles (%) | Internal resistance (25 °C) 2) | Low temperature characteristic (-20 °C) | |
|---|---|---|---|---|---|---|---|---|
| | | | | | | | Discharging capacity 2) | Internal resistance 2) |
| Example 3-1 | 1-8 | $LiMn_{1.95}Al_{0.05}O_4$ | Graphite | 115 | 88 | 92 | 117 | 88 |
| Example 3-2 | 1-20 | | | 110 | 84 | 94 | 110 | 93 |
| Example 3-3 | 1-32 | | | 115 | 88 | 92 | 116 | 88 |
| Comparative Example 3-1 | 1-38 | | | 100 | 78 | 100 | 100 | 100 |
| Comparative Example 3-2 | 1-42 | | | 104 | 67 | 105 | 85 | 104 |
| Example 3-4 | 1-8 | | $Li_4Ti_5O_{12}$ | 116 | 87 | 91 | 118 | 87 |
| Example3-5 | 1-20 | | | 111 | 87 | 94 | 110 | 94 |
| Example 3-6 | 1-32 | | | 115 | 88 | 92 | 117 | 88 |
| Comparative Example 3-3 | 1-38 | | | 100 | 84 | 100 | 100 | 100 |
| Comparative Example 3-4 | 1-42 | | | 105 | 66 | 105 | 86 | 104 |
| Example 4-1 | 1-8 | $LiFePO_4$ | Graphite | 116 | 89 | 92 | 117 | 87 |
| Example 4-2 | 1-20 | | | 110 | 85 | 94 | 109 | 93 |
| Example 4-3 | 1-32 | | | 115 | 89 | 93 | 116 | 88 |
| Comparative Example 4-1 | 1-38 | | | 100 | 78 | 100 | 100 | 100 |
| Comparative Example 4-2 | 1-42 | | | 105 | 68 | 106 | 84 | 106 |

2) In each of combinations of the electrodes, a relative value provided that the evaluation result of the laminate cell made by using electrolyte No.1-38 is 100.

[Examples 2-1 to 2-9, Comparative Examples 2-1 to 2-6]

The cathode body and the anode body used in Example 1-1 were changed, and using a non-aqueous electrolyte No.1-8, 1-20, 1-32, 1-38 or 1-42 as an electrolyte for non-aqueous electrolyte battery, initial electric capacity, cycle characteristic, internal resistance characteristic and low temperature characteristic of the battery were evaluated the same as Example 1-1. In addition, a cathode body, in which a cathode active material was $LiNi_{1/3}Co_{1/3}Mn_{1/3}O_2$, was made by applying a paste obtained by mixing 5 mass % of polyvinylidene fluoride (PVDF) as a binder and 5 mass % of acetylene black as a conductive material into 90 mass % of $LiNi_{1/3}Co_{1/3}Mn_{1/3}O_2$ powder and then adding N-methylpyrrolidone, onto an aluminium foil and then drying. The same as Example 1-1, in Examples 2-1 to 2-3 and Comparative Examples 2-1 and 2-2, in which an anode active material was graphite, a charge termination voltage was set at 4.3 V and a discharge termination voltage was set at 3.0 V when the battery evaluation was conducted. The same as Example 1-38, in Examples 2-4 to 2-6 and Comparative Examples 2-3 and 2-4, in which an anode active material was $Li_4Ti_5O_{12}$, a charge termination voltage was set at 2.8 V and a discharge termination voltage was set at 1.5 V when the battery evaluation was conducted. The same as Example 1-41, in Examples 2-7 to 2-9 and Comparative Examples 2-5 and 2-6, in which an anode active material was silicon (a simple substance), a charge termination voltage was set at 4.3 V and a discharge termination voltage was set at 3.0 V when the battery evaluation was conducted. Initial electric capacity, cycle characteristic, internal resistance characteristic and low temperature characteristic of the above-mentioned battery are shown in Table 3.

[Examples 3-1 to 3-6, Comparative Examples 3-1 to 3-4]

The cathode body and the anode body used in Example 1-1 were changed, and using a non-aqueous electrolyte No. 1-8, 1-20, 1-32, 1-38 or 1-42 as an electrolyte for non-aqueous electrolyte battery, initial electric capacity, cycle characteristic, internal resistance characteristic and low temperature characteristic of the battery were evaluated the same as Example 1-1. In addition, a cathode body, in which a cathode active material was $LiMn_{1.95}Al_{0.05}O_4$, was made by applying a paste obtained by mixing 5 mass % of polyvinylidene fluoride (PVDF) as a binder and 5 mass % of acetylene black as a conductive material into 90 mass % of $LiMn_{1.95}Al_{0.05}O_4$ powder and then adding N-methylpyrrolidone, onto an aluminium foil and then drying. The same as Example 1-1, in Examples 3-1 to 3-3 and Comparative Examples 3-1 and 3-2, in which an anode active material was graphite, a charge termination voltage and a discharge termination voltage were set as the same as Example 1-1. The same as Example 1-38, in Examples 3-4 to 3-6 and Comparative Examples 3-3 and 3-4, in which an anode active material was $Li_4Ti_5O_{12}$, a charge termination voltage was set at 2.7 V and a discharge termination voltage was set at 1.5 V when the battery evaluation was conducted. Initial electric capacity, cycle characteristic, internal resistance characteristic and low temperature characteristic of the above-mentioned battery are shown in Table 3.

[Examples 4-1 to 4-3, Comparative Examples 4-1 and 4-2]

The cathode body used in Example 1-1 was changed, and using a non-aqueous electrolyte No. 1-8, 1-20, 1-32, 1-38 or 1-42 as an electrolyte for non-aqueous electrolyte battery, initial electric capacity, cycle characteristic, internal resistance characteristic and low temperature characteristic of the battery were evaluated the same as Example 1-1. In addition, a cathode body, in which a cathode active material was $LiFePO_4$, was made by applying a paste obtained by mixing 5 mass % of polyvinylidene fluoride (PVDF) as a binder and 5 mass % of acetylene black as a conductive material into 90 mass % of $LiFePO_4$ powder covered with amorphous carbon and then adding N-methylpyrrolidone, onto an aluminium foil and then drying. A charge termination voltage was set at 3.6 V and a discharge termination voltage was set at 2.0 V when the battery evaluation was conducted. Initial electric capacity, cycle characteristic, internal resistance characteristic and low temperature characteristic of the above-mentioned battery are shown in Table 3.

As the above, in each Example in which $LiNi_{1/3}Co_{1/3}Mn_{1/3}O_2$, $LiMn_{1.95}Al_{0.05}O_4$ or $LiFePO_4$ was used as a cathode active material, it was confirmed that initial electric capacity, cycle characteristic, internal resistance characteristic and low temperature characteristic of a laminate cell made by using the electrolyte for non-aqueous electrolyte battery of the present invention have shown a superior tendency as a whole, as compared with the corresponding Comparative Examples. Therefore, it was shown that a non-aqueous electrolyte battery, in which a superior initial electric capacity was provided and in which physical properties such as cycle characteristic, internal resistance characteristic, low temperature characteristic, etc. were superior, could be obtained by using the electrolyte for non-aqueous electrolyte battery of the present invention, regardless of the kinds of the cathode active materials.

In addition, as the above, in each Example in which $Li_4Ti_5O_{12}$ or silicon (a simple substance) was used as an anode active material, it was confirmed that initial electric capacity, cycle characteristic, internal resistance characteristic and low temperature characteristic of a laminate cell made by using the electrolyte for non-aqueous electrolyte battery of the present invention were superior as a whole, as compared with the corresponding Comparative Examples. Therefore,

it was shown that a non-aqueous electrolyte battery, in which a superior initial electric capacity was provided and in which physical properties such as cycle characteristic, internal resistance characteristic, low temperature characteristic, etc. were superior, could be obtained by using the electrolyte for non-aqueous electrolyte battery of the present invention, regardless of the kinds of the anode active materials.

[Examples 1-44 and 1-45]

The same as Example 1-6, an electrolyte for non-aqueous electrolyte battery was prepared except that each of the above-mentioned compounds No.16 and No. 17 as the second compound was used, to make a cell and conduct a battery evaluation. A preparation condition of the non-aqueous electrolyte and concentrations of a free acid in the electrolyte of 1 hour and 24 hours after the preparation are shown in Table 4. The result of the evaluation of a battery made by using the electrolyte is shown in Table 5.

[Examples 1-46 to 1-48]

The same as Example 1-7, an electrolyte for non-aqueous electrolyte battery was prepared except that each of the above-mentioned compounds No.18 to No.20 as the second compound was used, to make a cell and conduct a battery evaluation. A preparation condition of the non-aqueous electrolyte and concentrations of a free acid in the electrolyte of 1 hour and 24 hours after the preparation are shown in Table 4. The result of the evaluation of a battery made by using the electrolyte is shown in Table 5.

[Comparative Examples 1-11 and 1-12]

The electrolytes of Comparative Examples 1-11 and 1-12 were respectively prepared the same as the above-mentioned Examples 1-44 and 1-45 except that the first compound was not added and that 0.5 mass % of the above-mentioned compound No.16 or compound No. 17 as the second compound was dissolved. A preparation condition of the non-aqueous electrolyte and concentrations of a free acid in the electrolyte of 1 hour and 24 hours after the preparation are shown in Table 4. The result of the evaluation of a battery made by using the electrolyte is shown in Table 5.

[Table 4]

| | Electrolyte No. | First compound | | Second compound | | Concentration of free acid (mass ppm) | |
|---|---|---|---|---|---|---|---|
| | | Compound name | Concentration (mass %) | Compound No. | Concentration (mass %) | 1 hr after preparation | 24 hr after preparation |
| Example 1-44 | 1-44 | Lithium difluoro(bis(oxalato)) phosphate | 1 | No.16 | 0.5 | 54 | 2 |
| Example 1-45 | 1-45 | | 1 | No.17 | 0.5 | 53 | 1 |
| Example 1-46 | 1-46 | | 1 | No.18 | 1 | 55 | 5 |
| Example 1-47 | 1-47 | | 1 | No.19 | 1 | 54 | 4 |
| Example 1-48 | 1-48 | | 1 | No.20 | 1 | 54 | 3 |
| Comparative Example 1-11 | 1-49 | None | 0 | No.16 | 0.5 | 56 | 2 |
| Comparative Example 1-12 | 1-50 | None | 0 | No.17 | 0.5 | 55 | 4 |

[Table 5]

| | Electrolyte No. | Initial discharging capacity 1) | Maintenance rate of capacity after 500 cycles (%) | Internal resistance (25 °C) 1) | Low temperature characteristic (-20 °C) | |
|---|---|---|---|---|---|---|
| | | | | | Discharging capacity 1) | Internal resistance 1) |
| Example 1-44 | 1-44 | 106 | 84 | 94 | 107 | 94 |
| Example 1-45 | 1-45 | 110 | 85 | 94 | 109 | 93 |
| Example 1-46 | 1-46 | 107 | 84 | 97 | 106 | 94 |
| Example 1-47 | 1-47 | 108 | 87 | 95 | 105 | 94 |
| Example 1-48 | 1-48 | 106 | 86 | 93 | 107 | 92 |
| Comparative Example 1-11 | 1-49 | 104 | 69 | 108 | 68 | 145 |
| Comparative Example 1-12 | 1-50 | 105 | 66 | 109 | 63 | 140 |
| 1) A relative value provided that the result of Comparative Example 1-1 is 100. | | | | | | |

[Example 10-26]

A preparation condition of the non-aqueous electrolyte and the result of a storage stability evaluation of the electrolyte are shown in Table 6. The result of the evaluation of a battery made by using the electrolyte is shown in Table 7. In addition, each value of cycle characteristic and internal resistance characteristic of the battery in Table 7 is a relative value provided that evaluation results of initial electric capacity and internal resistance of a laminate cell made by using the electrolyte No.10-37 before standing still for a month after the preparation are 100.

Using a mixed solvent, in which a volume ratio of an ethylene carbonate to an ethyl methyl carbonate was 1 : 2, as a non-aqueous solvent, an electrolyte for non-aqueous electrolyte battery was prepared by dissolving 1.0 mol/L of $LiPF_6$ as a solute, 1 mass % of lithium difluorobis(oxalato)phosphate as the first compound and 1 mass % of the above-mentioned siloxane No.16 containing a fluorine-containing alkoxy group as the second compound into the solvent. In addition, the above preparation was conducted while keeping temperature of the electrolyte in a range between 20 and 30 °C.

[Storage stability evaluation of an electrolyte]

The electrolyte which had been prepared was allowed to stand still for a month at 25 °C under argon atmosphere, and the amount of the above-mentioned second compound (siloxane No.16 containing a fluorine-containing alkoxy group) remaining in the electrolyte was measured. $^1H$ NMR and $^{19}F$ NMR methods were used to measure the amount of the remaining.

[Electrochemical characteristic evaluation of an electrolyte]

Using an electrolyte before standing still for a month after the preparation and an electrolyte after standing still for a month after the preparation, a cell was made from $LiNi_{1/3}Mn_{1/3}Co_{1/3}O_2$ as a cathode material and graphite as an anode material, and cycle characteristic and internal resistance characteristic of the battery were actually evaluated. A test cell was made as follows.

5 mass % of polyvinylidene fluoride (PVDF) as a binder and 5 mass % of acetylene black as a conductive

material were mixed into 90 mass % of $LiNi_{1/3}Mn_{1/3}Co_{1/3}O_2$ powder, followed by adding N-methylpyrrolidone, and then forming into a paste shape. A test cathode body was made by applying this paste onto an aluminium foil and then drying. In addition, 10 mass % of polyvinylidene fluoride (PVDF) as a binder was mixed into 90 mass % of graphite powder, followed by adding N-methylpyrrolidone, and then forming into a slurry shape. A test anode body was made by applying this slurry onto a copper foil and then drying for 12 hours at 120 °C. Then, 50 mAh cell having an aluminium laminate exterior was assembled by impregnating a separator made of polyethylene with the electrolyte.

[High temperature cycle characteristic]

Using the above cell, a charging and discharging test was conducted at an environmental temperature of 60 °C, and cycle characteristic was evaluated. Both of the charging and the discharging were conducted at 0.35 $mA/cm^2$ of current density. After reaching 4.3 V, 4.3V was kept for 1 hour in charging, and the discharging was conducted until 3.0 V, thereby repeating the charging and discharging cycle. Then, degree of deterioration of the cell was evaluated by maintenance rate of discharging capacity after 500 cycles (cycle characteristic evaluation). The maintenance rate of the discharging capacity was calculated by the following formula.

<Maintenance rate of discharging capacity after 500 cycles>

$$\text{Maintenance rate of discharging capacity (\%)} = (\text{discharging capacity after 500 cycles/initial discharging capacity}) \times 100$$

[Internal resistance characteristic (25 °C)]

A cell after the cycle test was charged until 4.2 V at 0.35 $mA/cm^2$ of current density at an environmental temperature of 25 °C. After that, internal resistance of the battery was measured.

[Table 6]

| | Electrolyte No. | Second compound | | First compound | | Amount of the second compound remaining after standing still for a month (%) |
|---|---|---|---|---|---|---|
| | | Compound No. | Concentration (mass %) | Name | Concentration (mass %) | |
| Example 10-26 | 10-26 | No.16 | 1 | Lithium difluorobis(oxalato)phosphate | 1 | 96 |
| Example 10-27 | 10-27 | No.16 | 1 | Lithium difluorooxalatoborate | 2 | 97 |
| Example 10-28 | 10-28 | No.16 | 1 | Lithium difluorobis(oxalato)phosphate | 1 | 97 |
| Example 10-29 | 10-29 | No.16 | 1 | Lithium tetrafluorooxalatophosphate | 1 | 98 |
| Example 10-30 | 10-30 | No.16 | 1 | Lithium difluorobis(oxalato)phosphate | 0.5 | 97 |
| Example 10-31 | 10-31 | No.21 | 1 | Lithium difluorooxalatoborate | 1 | 93 |
| Example 10-32 | 10-32 | No.18 | 1 | Lithium difluorobis(oxalato)phosphate | 1 | 94 |
| Example 10-33 | 10-33 | No.22 | 1 | Lithium difluorobis(oxalato)phosphate | 1 | 96 |
| Example 10-34 | 10-34 | No.23 | 1 | Lithium tetrafluoro(oxalato)phosphate | 1 | 97 |
| Example 10-35 | 10-35 | No.17 | 1 | Lithium difluorobis(oxalato)phosphate | 0.5 | 92 |
| Example 10-36 | 10-36 | No.19 | 1 | Lithium difluorobis(oxalato)phosphate | 1 | 99 |
| Comparative Example 10-1 | 10-37 | None | 0 | None | 0 | - |
| Comparative Example 10-2 | 10-38 | None | 0 | Lithium difluorobis (oxalato)phosphate | 1 | - |

(continued)

| | Electrolyte No. | Second compound | | First compound | | Amount of the second compound remaining after standing still for a month (%) |
|---|---|---|---|---|---|---|
| | | Compound No. | Concentration (mass %) | Name | Concentration (mass %) | |
| Reference Example 10-3 | 10-39 | No.1 | 0.5 | Lithium difluorobis(oxalato)phosphate | 1 | 52 |
| Reference Example 10-4 | 10-40 | No.1 | 1 | Lithium difluorobis(oxalato)phosphate | 1 | 46 |
| Reference Example 10-5 | 10-41 | No.2 | 0.5 | Lithium difluorobis(oxalato)phosphate | 1 | 32 |
| Reference Example 10-6 | 10-42 | No.32 | 1 | Lithium difluorobis(oxalato)phosphate | 1 | 19 |

[Table 7]

| | Electrolyte No. | Cathode active material | Anode active material | Electrolyte before standing still for a month after preparation | | Electrolyte after standing still for a month after preparation | |
|---|---|---|---|---|---|---|---|
| | | | | Maintenance rate of capacity after 500 cycles (%) | Internal resistance | Maintenance rate of capacity after 500 cycles (%) | Internal resistance |
| Example 10-26 | 10-26 | $LiNi_{1/3}Co_{1/3}Mn_{1/3}O_2$ | Graphite | 84 | 71 | 84 | 72 |
| Example 10-27 | 10-27 | | | 82 | 70 | 81 | 70 |
| Example 10-28 | 10-28 | | | 86 | 70 | 85 | 71 |
| Example 10-29 | 10-29 | | | 83 | 72 | 81 | 73 |
| Example 10-30 | 10-30 | | | 80 | 70 | 79 | 71 |
| Example 10-31 | 10-31 | | | 84 | 69 | 84 | 70 |
| Example 10-32 | 10-32 | | | 83 | 71 | 82 | 71 |
| Example 10-33 | 10-33 | | | 87 | 71 | 86 | 72 |
| Example 10-34 | 10-34 | | | 83 | 70 | 83 | 70 |
| Example 10-35 | 10-35 | | | 81 | 72 | 80 | 73 |
| Example 10-36 | 10-36 | | | 86 | 71 | 85 | 72 |
| Comparative Example 10-1 | 10-37 | | | 54 | 100 | 50 | 104 |

(continued)

| | Electrolyte No. | Cathode active material | Anode active material | Electrolyte before standing still for a month after preparation | | Electrolyte after standing still for a month after preparation | |
|---|---|---|---|---|---|---|---|
| | | | | Maintenance rate of capacity after 500 cycles (%) | Internal resistance | Maintenance rate of capacity after 500 cycles (%) | Internal resistance |
| Comparative Example 10-2 | 10-38 | | | 78 | 73 | 75 | 77 |
| Reference Example 10-3 | 10-39 | | | 84 | 69 | 75 | 85 |
| Reference Example 10-4 | 10-40 | | | 83 | 71 | 70 | 84 |
| Reference Example 10-5 | 10-41 | | | 85 | 73 | 75 | 90 |
| Reference Example 10-6 | 10-42 | | | 79 | 70 | 70 | 91 |

[Examples 10-27 to 10-36]

A preparation condition of the non-aqueous electrolyte and the result of a storage stability evaluation of the electrolyte are shown in Table 6. The result of the evaluation of a battery made by using the electrolyte is shown in Table 7.

Electrolytes for non-aqueous electrolyte batteries were prepared by changing each of the kinds and the addition amounts of the first compound and the second compound in the above-mentioned Example 10-26. The same as Example 10-26, a cell was made by using this non-aqueous electrolyte, and the battery evaluation was conducted.

[Comparative Examples 10-1 and 10-2, Reference Examples 10-3 to 10-6]

A preparation condition of the non-aqueous electrolyte and the result of a storage stability evaluation of the electrolyte are shown in Table 6. The result of the evaluation of a battery made by using the electrolyte is shown in Table 7.

The electrolyte of Comparative Example 10-1 was prepared the same as the above-mentioned Example 10-26 except that neither of the first compound and the second compound was added. The electrolyte of Comparative Example 10-2 was prepared the same as the above-mentioned Example 10-26 except that the second compound was not added and that 1 mass % of lithium difluorobis(oxalato)phosphate as the first compound was dissolved. Each of the electrolytes of Reference Examples 10-3 to 10-6 was prepared the same as the above-mentioned Example 10-26 except that 0.5 mass % or 1 mass % of the siloxane compound No.1 or No.2 or the following siloxane No.32 containing an alkoxy group with no fluorine atom as the second compound was added.

Compound No. 32

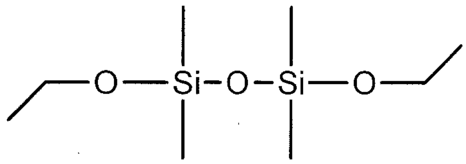

Comparing the above results, in case of using a siloxane containing a fluorine-containing alkoxy group as the second compound, the amount of the second compound (siloxane containing a fluorine-containing alkoxy group) remaining after standing still for a month showed 90 % or greater, and a high storage stability in the electrolyte was shown, as compared with a siloxane compound with no fluorine-containing alkoxy group.

In the result of the evaluation of the battery made by using the electrolyte before standing still for a month after the preparation, a siloxane containing a fluorine-containing alkoxy group was equal or superior in cycle characteristic and internal resistance characteristic to the siloxane compound with no fluorine-containing alkoxy group. In addition, as the characteristic of a battery made by using the electrolyte before standing still a month after the preparation is compared with that of a battery made by using the electrolyte after standing still a month after the preparation, the battery characteristic was relatively largely changed in case of using a siloxane compound with no fluorine-containing alkoxy group. In case of using a siloxane compound including a fluorine-containing alkoxy group, there was shown a tendency to observe almost no difference. Therefore, it was shown that a well-balanced, superior, non-aqueous electrolyte battery could be obtained by using a siloxane containing a fluorine-containing alkoxy group as the second compound even after standing still for a month after the preparation.

## Claims

1. A non-aqueous electrolyte for non-aqueous electrolyte battery comprising a non-aqueous solvent and a solute, the electrolyte for non-aqueous electrolyte battery being **characterized by** that at least one compound selected from the group consisting of lithium difluoro(bis(oxalato))phosphate, lithium tetrafluoro(oxalato)phosphate and lithium difluoro(oxalato)borate as a first compound and at least one siloxane compound represented by a general formula (1) or a general formula (2) as a second compound are contained in the electrolyte.

(1)

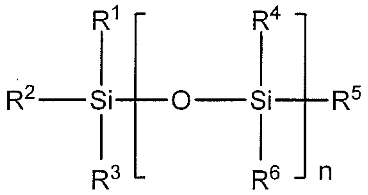

(2)

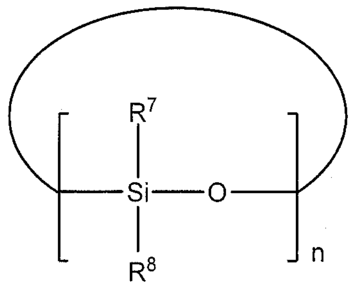

[In the general formula (1) and the general formula (2), each of $R^1$ to $R^8$ independently represents a group selected from an alkyl group, an alkoxy group, an alkenyl group, an alkenyloxy group, an alkynyl group, an alkynyloxy group, an aryl group and an aryloxy group. These groups may have a fluorine atom and an oxygen atom. In addition, n represents an integral number from 1 to 10. In case that n is 2 or greater, plural of $R^4$, $R^6$, $R^7$ or $R^8$ may respectively be the same or different.]

2. The electrolyte for non-aqueous electrolyte battery according to claim 1, wherein an amount of the first compound to be added is in a range between 0.01 and 5.0 mass % relative to a total amount of the electrolyte for non-aqueous electrolyte battery.

3. The electrolyte for non-aqueous electrolyte battery according to claim 1 or claim 2, which is **characterized by** that an amount of the second compound to be added is in a range between 0.01 and 5.0 mass % relative to a total amount of the electrolyte for non-aqueous electrolyte battery.

4. The electrolyte for non-aqueous electrolyte battery according to any of claims 1 to 3, which is **characterized by** that the group represented by $R^1$ to $R^6$ of the general formula (1) and the group represented by $R^7$ and $R^8$ of the general formula (2) are respectively independently a group selected from a methyl group, an ethyl group, a propyl group, a vinyl group, an aryl group and a fluorine-containing alkoxy group.

5. The electrolyte for non-aqueous electrolyte battery according to any of claims 1 to 4, which is **characterized by** that the group represented by $R^1$ to $R^6$ of the general formula (1) and the group represented by $R^7$ and $R^8$ of the general formula (2) are respectively independently a group selected from a methyl group, an ethyl group, a propyl group, a 2,2-difluoroethoxy group, a 2,2,2-trifluoroethoxy group, a 2,2,3,3-tetrafluoropropoxy group, a 2,2,3,3,3-pentafluoropropoxy group, a 1,1,1-trifluoroisopropoxy group and a 1,1,1,3,3,3 -hexafluoroisopropoxy group.

6. The electrolyte for non-aqueous electrolyte battery according to any of claims 1 to 5, wherein the second compound is a siloxane compound containing at least one fluorine-containing alkoxy group, which is represented by a general formula (3) or a general formula (4).

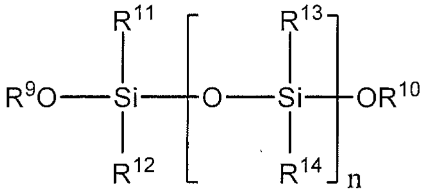 (3)

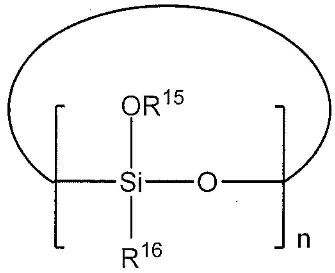 (4)

[In the general formula (3) and the general formula (4), each of $R^9$, $R^{10}$ and $R^{15}$ independently represents a group having at least one fluorine atom selected from an alkyl group, an alkenyl group, an alkynyl group and an aryl group. These groups may have an oxygen atom. Each of $R^{11}$ to $R^{14}$ and $R^{16}$ independently represents a group selected from an alkyl group, an alkoxy group, an alkenyl group, an alkenyloxy group, an alkynyl group, an alkynyloxy group, an aryl group and an aryloxy group. These groups may have a fluorine atom and an oxygen atom. In addition, n

represents an integral number from 1 to 10. In case that n is 2 or greater, plural of $R^{13}$, $R^{14}$, $R^{15}$ or $R^{16}$ may respectively be the same or different.]

**7.** The electrolyte for non-aqueous electrolyte battery according to any of claims 1 to 6, which is **characterized by** that the solute is at least one solute selected from the group consisting of lithium hexafluorophosphate ($LiPF_6$), lithium tetrafluoroborate ($LiBF_4$), lithium bis(trifluoromethanesulfonyl)imide ($LiN(CF_3SO_2)_2$), lithium bis(fluorosulfonyl)imide ($LiN(FSO_2)_2$), lithium bis(pentafluoroethanesulfonyl)imide ($LiN(C_2F_5SO_2)_2$), lithium difluorophosphate ($LiPO_2F_2$) and lithium bis(oxalato)borate ($LiB(C_2O_4)_2$).

**8.** The electrolyte for non-aqueous electrolyte battery according to any of claims 1 to 7, which is **characterized by** that the non-aqueous solvent is at least one non-aqueous solvent selected from the group consisting of cyclic carbonates, chain carbonates, cyclic esters, chain esters, cyclic ethers, chain ethers, sulfones or sulfoxide compounds and ion liquids.

**9.** A non-aqueous electrolyte battery comprising at least a cathode, an anode and an electrolyte for non-aqueous electrolyte battery, the non-aqueous electrolyte battery being **characterized by** that the electrolyte for non-aqueous electrolyte battery is the electrolyte for non-aqueous electrolyte battery according to any of claims 1 to 8.

**INTERNATIONAL SEARCH REPORT**

International application No. PCT/JP2013/066005

A. CLASSIFICATION OF SUBJECT MATTER
*H01M10/0567*(2010.01)i, *H01M10/052*(2010.01)i, *H01M10/0568*(2010.01)i, *H01M10/0569*(2010.01)i

According to International Patent Classification (IPC) or to both national classification and IPC

B. FIELDS SEARCHED

Minimum documentation searched (classification system followed by classification symbols)
H01M10/0567, H01M10/052, H01M10/0568, H01M10/0569

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2007-188871 A (Mitsubishi Chemical Corp.),<br>26 July 2007 (26.07.2007),<br>claim 1; paragraph [0018]<br>& US 2013/0022861 A1 & EP 1939971 A1<br>& WO 2007/055087 A1 | 1-5,7-9<br>6 |
| X<br>A | JP 2008-288214 A (Sony Corp.),<br>27 November 2008 (27.11.2008),<br>claims 1, 6<br>& US 2005/0095503 A1 & EP 1487047 A2 | 1-5,7-9<br>6 |

☐ Further documents are listed in the continuation of Box C.   ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 16 August, 2013 (16.08.13) | 27 August, 2013 (27.08.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005032714 A
- JP 2002134169 A
- JP 2004071458 A
- JP 2009164030 A